# EUROPEAN PATENT APPLICATION

(11) **EP 4 832 155 A1**
(43) Date of publication of application: **28.10.2026**
(21) Application number: 24907986.4
(22) Date of filing: 16.12.2024
(51) Int. Cl.: H01M 10/54, G01N 21/88, B02C 23/08, B09B 3/35, B09B 101/16

(54) **SHREDDED BATTERY MATERIAL AND BATTERY DISPOSAL METHOD**

(30) Priority: 18.12.2023 KR 20230185151
(71) Applicant: POSCO Holdings Inc., Pohang-si, Gyeongsangbuk-do 37859 (KR)
(72) Inventor: LEE, Juseung, Pohang-si, Gyeongsangbuk-do 37859 (KR); PARK, Joongkil, Pohang-si, Gyeongsangbuk-do 37859 (KR); PARK, Chonglyuck, Pohang-si, Gyeongsangbuk-do 37859 (KR); KIM, Wan-Yi, Pohang-si, Gyeongsangbuk-do 37859 (KR); HAN, Sangwoo, Pohang-si, Gyeongsangbuk-do 37859 (KR); PARK, Junyong, Pohang-si, Gyeongsangbuk-do 37859 (KR)
(74) Representative: Pfenning, Meinig & Partner mbB
(86) International application number: PCT/KR2024/020426
(87) International publication number: WO 2025/135703

(57) **Abstract**

The present invention relates to a battery shredded material and a battery processing method, wherein the battery shredded material is a battery shredded material in which at least one unit battery shredded material is dispersed and disposed, and has an R value of 190 to 260 in RGB of a captured two-dimensional image.

## Description

### [TECHNICAL FIELD]

The present invention relates to a waste battery, and relates to a battery shredded material extracted from recycling of a waste battery and a battery processing method.

### [BACKGROUND ART]

As demand for electric vehicles has become active worldwide, the problem of processing waste batteries generated from the electric vehicles has emerged as a social problem. In the case of lithium secondary batteries, which are main raw materials of the waste batteries, organic solvents, explosive materials, and heavy metal materials such as Ni, Co, Mn, and Fe are contained. However, Ni, Co, Mn, and Li have great rarity value as valuable metals, and recovery and recycling processes after lithium secondary batteries are discarded are emerging as important research fields.

Specifically, a lithium secondary battery mainly includes copper and aluminum used as current collectors, a Li-, Ni-, Co-, and Mn-containing oxide constituting a positive electrode material, and graphite used as a negative electrode material, and includes a separator separating the positive electrode material and the negative electrode material and an electrolyte solution injected into the separator. As a solvent and a salt constituting the electrolyte solution, carbonate organic materials such as ethylene carbonate and propylene carbonate are mainly mixed and used, and, for example, LiPF₆ is used.

In order to utilize the waste battery, development of a waste battery recycling process in which the waste battery is crushed to produce an intermediate material such as a waste battery shredded material or black powder, and then valuable metals are recovered through a subsequent process, is being actively conducted.

However, in the waste battery recycling process, although the waste battery differs depending on the number of times of battery use or the state thereof, it generally has a voltage in a range of 3.0 to 3.2 V in a fully discharged state on a cell basis, and has a voltage close to 4 V in a fully charged state. Therefore, since a module or pack in which tens to hundreds of cells are connected has residual voltage having considerably large energy, when the waste battery is physically disassembled by applying external impact to the waste battery, safety related to explosion of the battery or electric shock becomes a problem.

In order to prevent this, before shredding the battery, pretreatment for minimizing a chemical energy reaction is required by subjecting the battery to saltwater discharging, electrical discharging, or freezing treatment.

Saltwater discharging is a representative wet treatment method, and electrical discharging or freezing treatment relates to a dry treatment method. When copper impurities are introduced into a downstream process in the pretreatment step, there is a problem in that the valuable metal recovery rate decreases because the copper impurity content is high.

### [DETAILED DESCRIPTION OF THE INVENTION]

### [Technical Problem]

A technical problem to be solved by the present invention is to provide a battery shredded material capable of increasing a valuable metal recovery rate by containing copper impurities to a minimum extent and lowering the content of impurities when introduced into a subsequent process.

Another technical problem to be solved by the present invention is to provide a battery processing method for selecting a battery shredded material, in which, from battery shredded materials recovered from pretreatment, a battery shredded material containing an excessive amount of impurities such as copper in a subsequent process is selected, thereby lowering the content of impurities when introduced into a subsequent process and increasing a valuable metal recovery rate.

### [Technical Solution]

In one embodiment, the present invention relates to a battery shredded material in which at least one unit battery shredded material is dispersed and disposed, and the battery shredded material may have an R value of 190 to 260 in RGB of a captured two-dimensional image.

In one embodiment, the battery shredded material may have a G value of 120 to 230 in RGB of the captured two-dimensional image.

In one embodiment, the battery shredded material may have a B value of 90 to 190 in RGB of the captured two-dimensional image.

In one embodiment, the battery shredded material may have a standard deviation of an R value of 22 to 30 in RGB of the captured two-dimensional image.

In one embodiment, based on the captured two-dimensional image, an area fraction of the copper may be 5.0 to 10.0% of the entire area.

In one embodiment, the unit battery shredded material may include a separator on which a positive electrode or a negative electrode is stacked on at least one surface.

In one embodiment, the unit battery shredded material may include a current collector layer in which copper (Cu) in the negative electrode is disposed.

A battery processing method according to another embodiment of the present invention may include pretreating a battery; shredding the pretreated battery; capturing an image of a shredded result; extracting a color of the shredded result from the captured image; and classifying and removing an over-discharged battery shredded material from the shredded result based on the extracted color.

In one embodiment, the pretreating of the battery may include preparing the battery and forcibly discharging the battery.

In one embodiment, the method may include, between the shredding of the pretreated battery and the capturing of the image of the shredded result, dispersing the shredded result.

In one embodiment, the extracting of the color of the shredded result from the captured image may include extracting an RGB value.

In one embodiment, the classifying and removing of the over-discharged battery shredded material from the shredded result based on the extracted color may include classifying and removing an over-discharged battery shredded material having an R value of 175 to 185 in RGB of a captured two-dimensional image of the shredded result.

In one embodiment, the classifying and removing of the over-discharged battery shredded material from the shredded result based on the extracted color may include classifying and removing an over-discharged battery shredded material having a G value of 125 to 140 in RGB of a captured two-dimensional image of the shredded result.

In one embodiment, the classifying and removing of the over-discharged battery shredded material from the shredded result based on the extracted color may include classifying and removing an over-discharged battery shredded material having a B value of 100 to 120 in RGB of a captured two-dimensional image of the shredded result.

In one embodiment, the classifying and removing of the over-discharged battery shredded material from the shredded result based on the extracted color may include classifying and removing an over-discharged battery shredded material in which an area fraction of the copper is 2.0 to 4.5% of the entire area based on a captured two-dimensional image of the shredded result.

In one embodiment, after the classifying and removing of the over-discharged battery shredded material from the shredded result based on the extracted color, the method may include pulverizing a selected battery shredded material from which the over-discharged battery shredded material has been removed from the shredded result.

### [Advantageous Effects]

A battery shredded material according to one embodiment of the present invention has an average R value of 190 to 260 in RGB of a surface of the battery shredded material, thereby preventing a problem in which, when applied to a subsequent process, the content of impurities such as copper increases and the recovery rate of valuable metals decreases, by minimizing contamination by copper.

A battery processing method according to another embodiment of the present invention includes a method of selecting a battery shredded material having an average R value of 190 to 260 in RGB from battery shredded materials, thereby preventing a problem in which, when applied to a subsequent process, the content of impurities such as copper increases and the recovery rate of valuable metals decreases.

### [BRIEF DESCRIPTION OF THE DRAWINGS]

FIGS. 1A to 1C show photographs of battery shredded materials according to one embodiment of the present invention.
FIGS. 2A to 2C show photographs of battery shredded materials according to Comparative Examples of the present invention.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the phrases clearly indicate the contrary. As used in the specification, the meaning of "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

Hereinafter, embodiments of the present invention will be described in detail. However, these are presented as examples, the present invention is not limited thereby, and the present invention is defined only by the scope of the claims to be described below.

The battery shredded material according to one embodiment of the present invention may be one in which at least one unit battery shredded material is dispersed and disposed. Specifically, the unit battery shredded material is for recovering valuable metals from a waste battery, and is a layered structure including a separator on which a positive electrode or a negative electrode is stacked on at least one surface.

Specifically, the layered structure may include a configuration in which a positive electrode or a negative electrode is included on one surface or both surfaces of the separator with respect to the separator. More specifically, the number of layers of the layered structure may correspond to the number of separators.

The layered structure includes, for example, any one of positive electrode-separator-negative electrode, positive electrode-separator, separator-positive electrode, separator-negative electrode, and negative electrode-separator, and, for example, positive electrode-separator-negative electrode-separator-positive electrode-separator-negative electrode may have a threelayer layered structure. Specifically, as at least one or more layers are stacked, the unit battery shredded material may have a predetermined thickness in a thickness direction.

In one embodiment, the unit battery shredded material may include a current collector layer in which copper (Cu) in the negative electrode is disposed. The negative electrode may include a current collector, and specifically, the current collector includes a copper (Cu) foil, and a current collector layer including copper may be included in the unit battery shredded material.

In one embodiment, the unit battery shredded material may satisfy the following Condition 1.

<Condition 1> The layered structure may be a stacked structure of one or more layers and seven or fewer layers.

The unit battery shredded material may be a layered structure having a stacked structure of one or more layers and seven or fewer layers. Specifically, the layered structure may be a stacked structure of one or more layers and five or fewer layers.

As the layered structure is stacked in the above range, the temperature increase amount of the shredded material can be minimized, and a temperature increase time can be appropriately required. When the layered structure is stacked to be thicker than the upper limit of the above range, there is a problem in that the temperature increase amount excessively increases and the temperature increase time also increases, causing combustion and resulting in fire.

In one embodiment, the unit battery shredded material may satisfy the following Condition 2.

<Condition 2> The size of the unit battery shredded material may be 100 mm or less based on a major axis, which is the longest axis among a horizontal direction, a vertical direction, and a height direction.

In one embodiment, the unit battery shredded material may have a size of 100 mm or less based on the major axis. Specifically, the size of the unit battery shredded material may be 50 mm or less. When the size of the unit battery shredded material is excessively large, there is a problem in that the temperature of the battery shredded material itself rises to 100°C or higher, and thus there is a high possibility of a fire occurring.

In one embodiment, the battery shredded material may have an R value of 190 to 260 in RGB of a captured two-dimensional image. The RGB value of the two-dimensional image means a value measured by a method in which external light is irradiated to the shredded material in a visible light region having a wavelength of 400 to 700 nm, and reflected light obtained by transmitting the light of the illumination is captured by an image camera. Specifically, the RGB value is obtained by measuring a two-dimensional image based on an area of 260 mm × 300 mm with respect to the battery shredded material in which the unit battery shredded material is dispersed and disposed, measuring an RGB value from the two-dimensional image, and then extracting the R value. Specifically, the R value may be 191 to 255. By satisfying the above-described range of the R value, the battery shredded material may be used to manufacture black powder in which copper impurities are minimized.

When the R value deviates from the lower limit of the above-described range, there is a problem in that copper is ionized and precipitated, so that the color of the current collector of the battery shredded material is precipitated as dark brown, and there is a problem in that a large amount of copper impurities is contained in the resultant product and the recovery efficiency of valuable metals is reduced.

In one embodiment, the battery shredded material may have a G value of 120 to 230 in RGB of a captured two-dimensional image. Specifically, the RGB value is obtained by measuring a captured two-dimensional image with respect to the battery shredded material in which the unit battery shredded material is dispersed and disposed, measuring an RGB value from the two-dimensional image, and then extracting the G value. Specifically, the G value may be 128 to 228. By satisfying the above-described range of the G value, the battery shredded material may be used to manufacture black powder in which copper impurities are minimized.

When the G value deviates from the lower limit of the above-described range, there is a problem in that copper is ionized and precipitated, so that the color of the current collector of the battery shredded material is precipitated as dark brown, and there is a problem in that a large amount of copper impurities is contained in the resultant product and the recovery efficiency of valuable metals is reduced.

In one embodiment, the battery shredded material may have a B value of 90 to 190 in RGB of a captured two-dimensional image. Specifically, the RGB value is obtained by measuring a captured two-dimensional image with respect to the battery shredded material in which the unit battery shredded material is dispersed and disposed, measuring an RGB value from the two-dimensional image, and then extracting the B value. Specifically, the B value may be 97 to 185. By satisfying the above-described range of the B value, the battery shredded material may be used to manufacture black powder in which copper impurities are minimized. When the B value deviates from the lower limit of the above-described range, there is a problem in that copper is ionized and precipitated, so that the color of the current collector of the battery shredded material is precipitated as dark brown, and there is a problem in that a large amount of copper impurities is contained in the resultant product and the recovery efficiency of valuable metals is reduced.

In one embodiment, the battery shredded material may have a standard deviation of an R value of 22 to 30 in RGB of a two-dimensional image measured based on an area of 260 mm × 300 mm. Specifically, the standard deviation means a value calculated by a method of checking RGB values by arbitrarily sampling several sections of colors of Cu, which is a desired detection target, in the dispersed shredded material from the RGB values obtained from the two-dimensional image, and calculating a dispersion range of the Cu color. The standard deviation of the R value may be a standard deviation of an R value of 23 to 25.

In one embodiment, the battery shredded material may have a standard deviation of a G value of 30 to 40 in RGB of the captured two-dimensional image. Specifically, the standard deviation of the G value may have a value of 33 to 36.

In one embodiment, the battery shredded material may have a standard deviation of a B value of 25 to 35 in RGB of the captured two-dimensional image. Specifically, the standard deviation of the B value may have a value of 27 to 30.

As described above, the battery shredded material satisfying the above-described ranges of RGB values is a battery shredded material pretreated in a normal discharge range. By selecting a normally discharged battery shredded material, rather than an over-discharged battery shredded material, and performing a subsequent process, black powder in which impurities such as copper are minimized can be manufactured.

In one embodiment, in the battery shredded material, based on a captured two-dimensional image, the area fraction of the copper may be 5.0 to 10.0%. Specifically, the area fraction of the copper is obtained by measuring a two-dimensional image based on an area of 260 mm × 300 mm with respect to the battery shredded material in which the unit battery shredded material is dispersed and disposed, extracting a color of copper from the two-dimensional image, and indicating an area fraction occupied by the color of copper based on 100% of the area of 260 mm × 300 mm.

The area fraction of the copper may satisfy 5.0 to 10.0%, specifically 6.0 to 9.8%, and more specifically 6.9 to 9.6%. By satisfying the above-described range of the area fraction of the copper, it is possible to confirm a shredded material treated under pretreatment conditions capable of minimizing impurities.

When the area fraction of the copper deviates from the upper limit of the above-described range, a problem may occur in that the impurity level of the subsequent process increases because optimized dry shredding conditions are exceeded. When the area fraction of the copper deviates from the lower limit of the above-described range, there may be a problem in that the probability of generating impurities increases because electrical discharging deviates from existing range conditions.

A battery processing method according to another embodiment of the present invention includes pretreating a battery; shredding the pretreated battery; capturing an image of a shredded result; extracting a color of the shredded result from the captured image; classifying and removing an over-discharged battery shredded material from the extracted shredded result; and pulverizing a selected battery shredded material from which the over-discharged battery shredded material has been removed from the shredded result.

The pretreating of the battery may include preparing the battery and forcibly discharging the battery. In the preparing of the battery, the battery may be, for example, a lithium secondary battery separated from an automobile, a secondary battery separated from an electronic device such as a mobile phone, a camera, or a laptop computer, and specifically, a lithium secondary battery.

The forcibly discharging of the battery is a step of lowering a voltage in the battery, and may be a step of controlling a voltage remaining minutely inside the battery to be lowered close to 0 V. Specifically, by undergoing the forcibly discharging step, even when a short circuit in which a positive electrode and a negative electrode in the battery directly contact each other occurs, a battery reaction does not occur, and thus the temperature of the battery does not increase, so that gas generation and combustion of an electrolyte do not occur.

The shredding of the pretreated battery may be a step of shredding the battery that has undergone the discharging process by applying an external force thereto. Specifically, the shredding of the battery may mean a process of applying impact or pressure to the battery so that a part of the battery is separated from the battery.

In one embodiment, the shredding of the battery may mean all of a process of pulverizing the battery, a process of cutting the battery, a process of compressing the battery, and a combination thereof. Specifically, the shredding may include all processes that can destroy the battery and obtain a shredded material having a small size.

In one embodiment, the shredding of the battery may include all processes of destroying the battery by compressing the battery or applying an external force such as shearing force or tensile force. The shredding of the battery may be performed using, for example, a shredder.

In one embodiment, the shredding of the battery may be performed at least once. Specifically, the shredding may be performed continuously or discontinuously at least once.

In one embodiment, the shredding of the battery may be performed under conditions of supplying an inert gas, carbon dioxide, nitrogen, water, or a combination thereof, or under a vacuum atmosphere condition of 100 torr or less. By performing shredding in the atmosphere, explosion of the battery can be prevented, vaporization of the electrolyte solution can be suppressed, and flammable gases such as ethylene, propylene, or hydrogen may not be generated.

The capturing of the image of the shredded result may be a step of measuring a two-dimensional image based on an area of 260 mm × 300 mm with respect to the battery shredded material in which the unit battery shredded material is dispersed and disposed.

The extracting of the color of the shredded result from the captured image may be a step of extracting RGB values from the image. Specifically, in the extracting of the color of the shredded result, each of all pixels included in an area of a designated region of interest from the image has an RGB value, and pixels included in the previously derived RGB reference value range are set to "1" and pixels outside the reference are set to "0" (the opposite is also possible), thereby extracting a desired region from the captured image.

In one embodiment, the method may include, between the shredding of the pretreated battery and the capturing of the image of the shredded result, dispersing the shredded result. Specifically, the dispersing of the shredded result may be a step of dispersing the battery shredded material to be evenly spread by vacuum or external force. By undergoing the dispersing step, there is an advantage in that colors for a large amount of unit battery shredded materials can be easily extracted.

The classifying and removing of the over-discharged battery shredded material from the shredded result based on the extracted color may be a step of selecting and removing an over-discharged battery shredded material based on the extracted color. In the classifying and removing of the over-discharged battery shredded material, characteristics of the over-discharged battery shredded material are as follows.

In one embodiment, the over-discharged battery shredded material may have an R value of 175 to 185 in RGB of a captured two-dimensional image, for example, a two-dimensional image of 260 mm × 300 mm.

In one embodiment, the over-discharged battery shredded material may have a G value of 125 to 140 in RGB of a two-dimensional image of 260 mm × 300 mm.

In one embodiment, the over-discharged battery shredded material may have a B value of 100 to 120 in RGB of a captured two-dimensional image.

The RGB value of the two-dimensional image means a value measured in a visible light region using illumination and camera optical equipment. Specifically, the RGB value is obtained by measuring a captured two-dimensional image with respect to the battery shredded material in which the unit battery shredded material is dispersed and disposed, measuring RGB values of each pixel from the two-dimensional image, and then extracting the R value, G value, and B value.

In the over-discharged battery shredded material, even after lithium is completely released from graphite in the negative electrode, discharging continues, and accordingly, a copper foil, which is the negative electrode current collector, may be oxidized, so that copper ions may come out into the electrolyte solution. Thereafter, the copper ions penetrate the separator and are deposited on a surface of the positive electrode material, thereby causing a problem. Accordingly, when the over-discharged battery shredded material is introduced into a subsequent process, the copper impurity content increases, thereby causing a problem in that the recovery rate of an alloy for recovering valuable metals in the subsequent process decreases.

By selecting and removing the over-discharged battery shredded material having the above-described color, only normally discharged battery shredded material is selected and introduced into a subsequent process, and thus the content of impurities can be reduced and the recovery rate of an alloy for recovering valuable metals can be increased.

In one embodiment, the extracting of the color of the shredded result from the captured image may include extracting an area fraction of copper. Specifically, in the extracting of the color of the shredded result, RGB values of pixels in a region of interest of the captured image may be checked for a color corresponding to copper from the captured image, values included in a desired reference detection range may be converted into "1," and values outside the range may be converted into "0" by binarization, and an area ratio of the color corresponding to copper may be confirmed.

In one embodiment, based on a captured two-dimensional image of the over-discharged battery shredded material, the area fraction of the copper may be 2.0 to 4.5%. Specifically, the area fraction may be 2.00 to 4.15%. As described above, it can be confirmed that, in the over-discharged battery shredded material, since copper ions penetrate the separator and are deposited on a surface of the positive electrode material, the copper area fraction has a lower value than that of battery shredded material that has undergone normal discharging.

As described above, by classifying and removing the over-discharged battery shredded material from the battery shredded material and selecting the battery shredded material that has undergone normal discharging, black powder having a low impurity content can be manufactured in a subsequent process.

In one embodiment, after the classifying and removing of the over-discharged battery shredded material from the shredded result based on the extracted color, the method may include pulverizing a selected battery shredded material from which the over-discharged battery shredded material has been removed from the shredded result. The pulverizing may be a step of making the shredded material into a fine powder. Specifically, the pulverizing may be a step of processing the shredded material to a size of several hundred µm.

Hereinafter, preferred Examples and Comparative Examples of the present invention will be described. However, the following Examples are merely preferred embodiments of the present invention, and the present invention is not limited to the following Examples.

### Experimental Example

### <Example> - Normal Discharge Stabilization Treatment

### Pretreatment Step

An NCM battery was prepared as a waste battery in an amount of 2,750 g, and electrical discharging was performed on the waste battery to lower the voltage of the waste battery.

At this time, the electrical discharging was performed under a condition of SOC 30 to 60% or less.

### Battery Shredding Step

The waste battery was shredded under freezing conditions using shredder equipment so that the longest length among the horizontal and vertical lengths of the waste battery was 100 mm or less.

### Dispersion Treatment Step

A dispersion treatment step was performed in which vibration was applied so that the shredded waste battery shredded material fell to a lower end of the shredder and was spread widely. Specifically, the dispersion treatment step was performed using a vibrating device under conditions under which a target shredded material could be set up in a designated region. For example, when shredded material is contained in a designated case, this means conditions under which the upper portion of the contained shredded material can be photographed under the same conditions.

### Color Photographing and Detection Step of Battery Shredded Material

The dispersed waste battery shredded material was photographed by installing an optical apparatus using illumination and a camera, specifically, a Basler ace acA2500 color camera and flat dome light, and a region of interest (ROI) of the photographed image was measured. More specifically, for the dispersed waste battery shredded material, an image was photographed so that RGB values of respective pixel values in a region of 260 mm × 300 mm, which is a region of interest, could be identified, an RGB range for designated pretreatment conditions could be identified, and an area could be calculated. However, the present invention is not limited to the corresponding region. Whether to transfer to the subsequent process was determined based on the area ratio of copper extracted relative to the entire area.

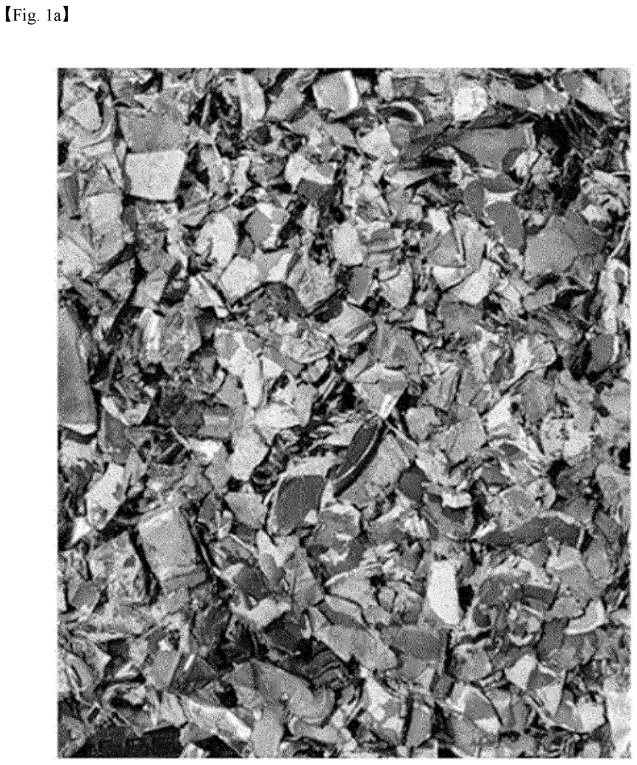

FIGS. 1A to 1C show photographs of battery shredded materials according to one embodiment of the present invention.

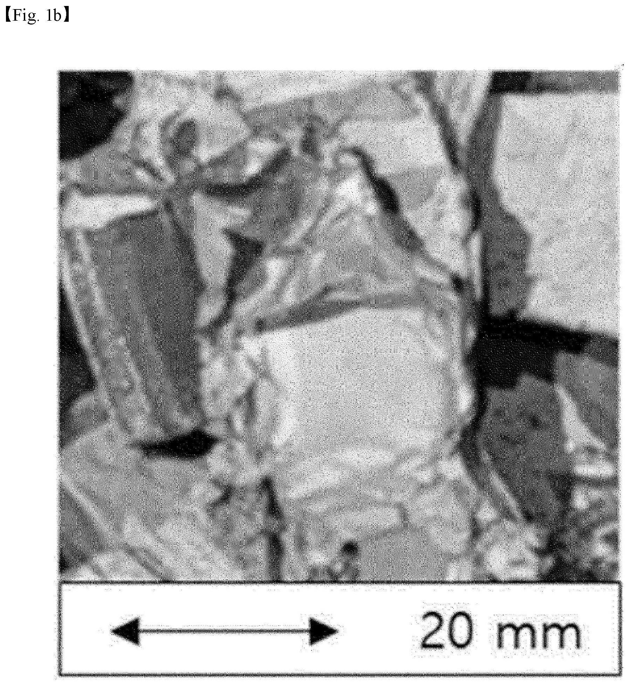

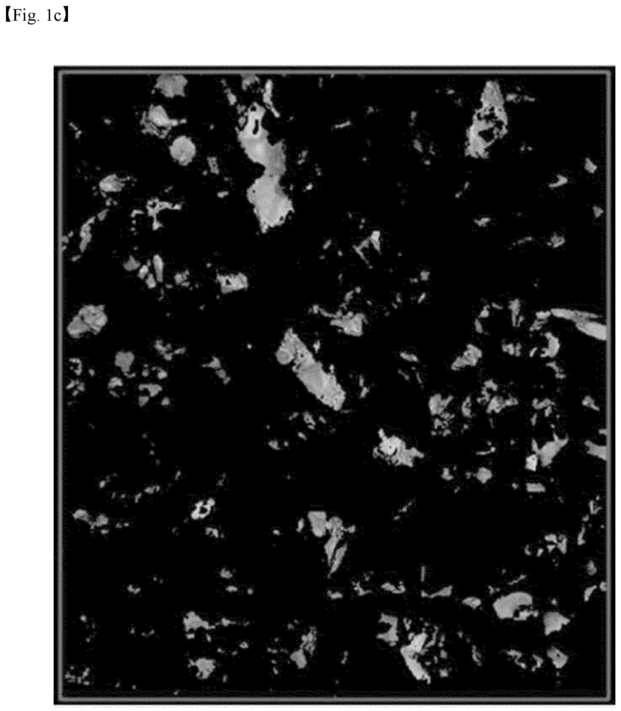

FIG. 1A is a photograph of a battery shredded material according to one embodiment of the present invention, FIG. 1B is an enlarged photograph of the battery shredded material according to one embodiment of the present invention, and FIG. 1C is an image obtained by extracting the color of copper from FIG. 1A.

### <Comparative Example> - Over-Discharge Stabilization Treatment

The same procedure as in the Example was performed except that, in the pretreatment step, the electrical discharging condition was changed to an over-discharging condition under which reverse voltage was applied at a 0 V condition to 0 V or less.

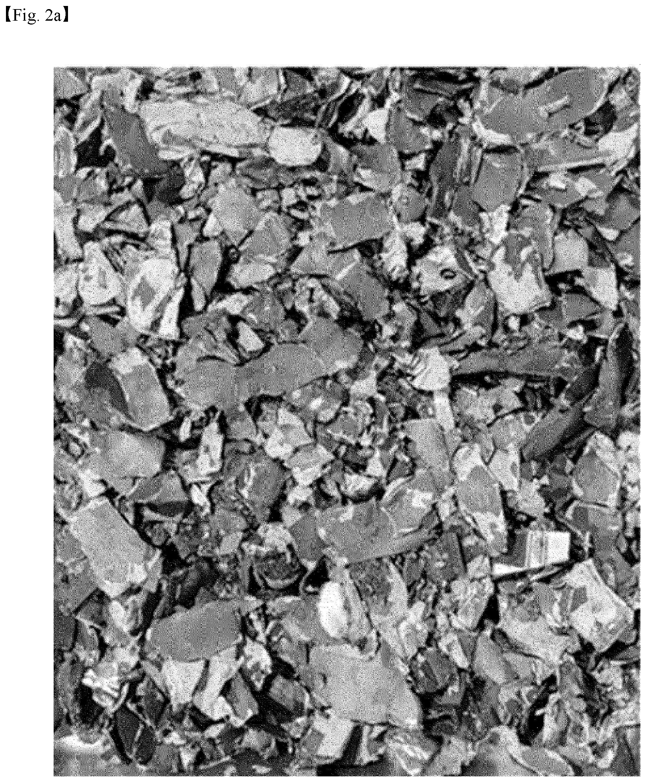

FIGS. 2A to 2C show photographs of battery shredded materials according to Comparative Examples of the present invention.

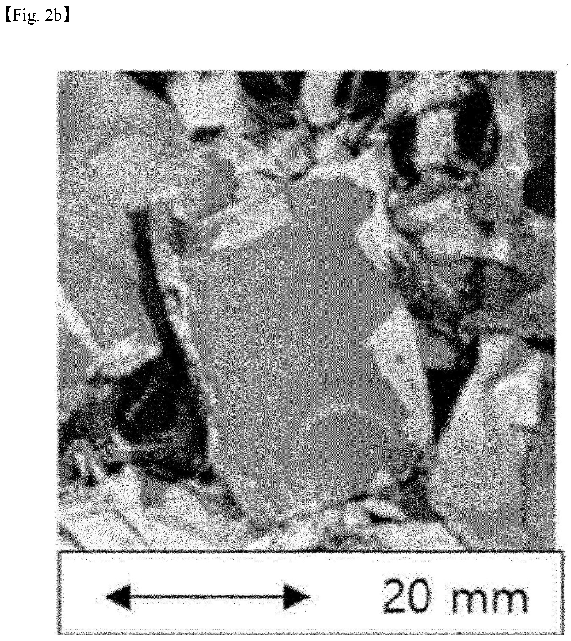

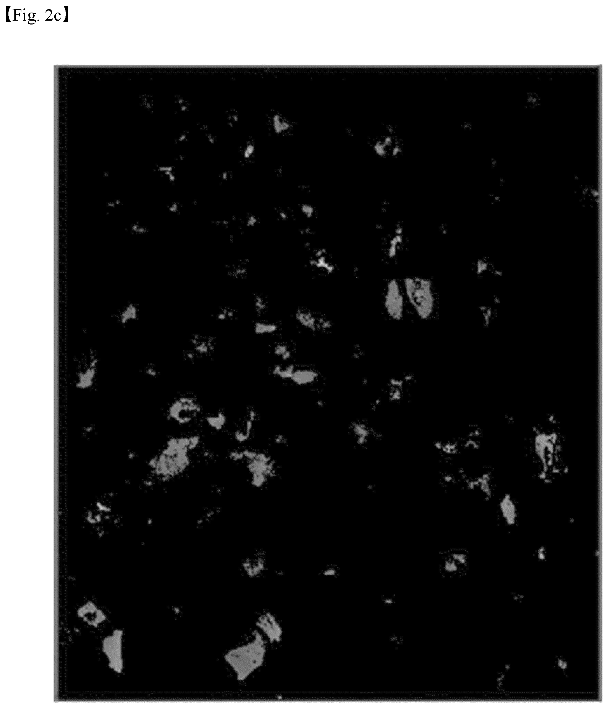

FIG. 2A is a photograph of a battery shredded material according to a Comparative Example of the present invention, FIG. 2B is an enlarged photograph of a battery shredded material according to one embodiment of the present invention, and FIG. 2C is an image of the color of copper from FIG. 2A.

Table 1 below shows an RGB color table of battery shredded materials when electrically discharged batteries were shredded according to the Example and the Comparative Example.

In the RGB color table, 10 points for each position of the battery shredded material were arbitrarily selected, and result values were confirmed.

**[Table 1]**

| Classification | Colo r | 1 | 2 | 3 | 4 | 5 | 6 | 7 | 8 | 9 | 10 | Average | Maximum | Minimum | Standard Deviation |
|---|---|---|---|---|---|---|---|---|---|---|---|---|---|---|---|
| Example | R | 253 | 225 | 232 | 255 | 216 | 255 | 191 | 214 | 254 | 204 | 230 | 255 | 191 | 24 |
| | G | 185 | 149 | 167 | 228 | 146 | 219 | 128 | 149 | 196 | 145 | 171 | 228 | 128 | 34 |
| | B | 146 | 115 | 129 | 185 | 112 | 161 | 97 | 117 | 156 | 105 | 132 | 185 | 97 | 28 |
| Comparative Example | R | 180 | 186 | 188 | 177 | 186 | 185 | 176 | 179 | 172 | 117 | 175 | 188 | 176 | 21 |
| | G | 118 | 121 | 123 | 118 | 129 | 133 | 113 | 131 | 120 | 116 | 122 | 133 | 113 | 7 |
| | B | 97 | 101 | 103 | 100 | 110 | 111 | 65 | 109 | 98 | 98 | 99 | 111 | 65 | 13 |

Table 2 below shows the ratio of a region occupied by a color corresponding to copper when the color corresponding to copper was extracted from the battery shredded material when electrically discharged batteries were shredded according to the Example and the Comparative Example.

The color corresponding to copper was obtained by photographing an RGB image of the shredded material within a measurable focal distance using an optical apparatus using illumination and a camera, measuring the number of pixels included in a detection range relative to the entire area in a range of 260 mm × 300 mm, which is a region of interest, and calculating a fraction.

**[Table 2]**

| Classification | 1 | 2 | 3 | 4 | 5 | 6 | 7 | 8 | 9 | 10 | Average | Maximum | Minimum | Standard Deviation |
|---|---|---|---|---|---|---|---|---|---|---|---|---|---|---|
| Exa mple | 9.51 | 9.03 | 9.27 | 7.79 | 8.80 | 8.50 | 6.93 | 9.02 | 8.24 | 9.53 | 8.66 | 9.53 | 6.93 | 0.82 |
| Comparative Example | 2.86 | 2.81 | 2.78 | 2.91 | 2.00 | 2.73 | 2.93 | 3.04 | 3.63 | 4.15 | 2.98 | 0.57 | 4.15 | 0.57 |

Referring to Table 1, it can be confirmed that, in the case of normal discharging, the R value, G value, and B value among RGB color values have high values compared with over-discharging. This can be regarded as being close to the color of copper metal, and means that, in the case of over-discharging, copper is ionized and deposited, and thus changes to a dark tone.

Referring to Table 2, it can be confirmed that, in the case of normal discharging, a color region corresponding to copper occupies a ratio of about 8.66% based on a region of 260 mm × 300 mm, and in the case of over-discharging, the ratio is as low as about 2.98%. It was confirmed that this is because, in the shredding process, graphite attached to the copper current collector in the Example is more easily separated than in the Comparative Example, and in the Comparative Example, graphite attached to the copper current collector has stronger bonding force due to deposition, and thus the graphite is relatively bonded to the copper current collector, so that the ratio of the color region corresponding to copper appears low.

### <Evaluation Example> - Valuable Metal Recovery Rate

Table 3 below shows valuable metal recovery rates and impurity ratios when black powder was obtained by shredding the Example and the Comparative Example.

The valuable metal recovery rates and impurity ratios were measured by making the materials into a black mass form and measuring ratios of analysis elements using an ICP analysis apparatus.

When the Cu content in the black powder of the Comparative Example increases, it can be confirmed that the recovery rates of Li, Ni, Co, and Mn decrease due to process load in a hydrometallurgical process for removing Cu.

**[Table 3]**

| | Valuable Metal Recovery Rate [%] | | | | Impurity |
|---|---|---|---|---|---|
| | Li | Ni | Co | Mn | Cu |
| Example | 70 | 93 | 94 | 94 | 0.33 |
| Comparative Example | 54 | 81 | 79 | 82 | 3.96 |

### Classification Step

According to the Example and the Comparative Example, a step of selecting the manufactured battery shredded materials so that the shredded material of the Comparative Example, which had undergone over-discharging, was not introduced into the subsequent process was performed. Specifically, a step of removing the shredded material of the Comparative Example, which had undergone over-discharging, was performed by detecting pixels corresponding to the discharge condition in the RGB color range and calculating the ratio of the detected area relative to the entire area.

### Pulverization Step

The shredded material of the Comparative Example, which had undergone over-discharging, was removed, and a step of pulverizing the Example using pulverization equipment so as to have a particle size of several hundred µm was performed.

Although preferred embodiments have been described above in detail, the scope of rights of the present invention is not limited thereto, and various modifications and improvements by those skilled in the art using the basic concept defined in the following claims also fall within the scope of rights of the present invention.

## Claims

1. A battery shredded material in which at least one unit battery shredded material is dispersed and disposed,
wherein the battery shredded material has an R value of 190 to 260 in RGB of a captured two-dimensional image.

2. The battery shredded material of claim 1,
wherein the battery shredded material has a G value of 120 to 230 in RGB of the captured two-dimensional image.

3. The battery shredded material of claim 1,
wherein the battery shredded material has a B value of 90 to 190 in RGB of the captured two-dimensional image.

4. The battery shredded material of claim 1,
wherein the battery shredded material has a standard deviation of an R value of 22 to 30 in RGB of the captured two-dimensional image.

5. The battery shredded material of claim 1,
wherein, based on the captured two-dimensional image, an area fraction of copper is 5.0 to 10.0% of the entire area.

6. The battery shredded material of claim 1,
wherein the unit battery shredded material includes a separator on which a positive electrode or a negative electrode is stacked on at least one surface.

7. The battery shredded material of claim 1,
wherein the unit battery shredded material includes a current collector layer in which copper (Cu) in the negative electrode is disposed.

8. A battery processing method comprising:
pretreating a battery;
shredding the pretreated battery;
capturing an image of a shredded result;
extracting a color of the shredded result from the captured image; and
classifying and removing an over-discharged battery shredded material from the shredded result based on the extracted color.

9. The battery processing method of claim 8,
wherein the pretreating of the battery comprises:
preparing the battery; and
forcibly discharging the battery.

10. The battery processing method of claim 8, further comprising, between the shredding of the pretreated battery and the capturing of the image of the shredded result,
dispersing the shredded result.

11. The battery processing method of claim 8,
wherein the extracting of the color of the shredded result from the captured image comprises extracting an RGB value.

12. The battery processing method of claim 11,
wherein the classifying and removing of the over-discharged battery shredded material from the shredded result based on the extracted color comprises classifying and removing an over-discharged battery shredded material having an R value of 175 to 185 in RGB of a two-dimensional image captured with respect to the shredded result.

13. The battery processing method of claim 11,
wherein the classifying and removing of the over-discharged battery shredded material from the shredded result based on the extracted color comprises classifying and removing an over-discharged battery shredded material having a G value of 125 to 140 in RGB of a two-dimensional image captured with respect to the shredded result.

14. The battery processing method of claim 11,
wherein the classifying and removing of the over-discharged battery shredded material from the shredded result based on the extracted color comprises classifying and removing an over-discharged battery shredded material having a B value of 100 to 120 in RGB of the captured two-dimensional image of the shredded result.

15. The battery processing method of claim 8,
wherein the classifying and removing of the over-discharged battery shredded material from the shredded result based on the extracted color comprises classifying and removing an over-discharged battery shredded material in which an area fraction of copper is 2.0 to 4.5% of the entire area based on the captured two-dimensional image of the shredded result.

16. The battery processing method of claim 8, further comprising, after the classifying and removing of the over-discharged battery shredded material from the shredded result based on the extracted color,
pulverizing a selected battery shredded material from which the over-discharged battery shredded material has been removed from the shredded result.
